**Europäisches Patentamt**

(19) **European Patent Office**

**Office européen des brevets**

(11) Veröffentlichungsnummer: **0 257 478**
**B1**

(12) ## EUROPÄISCHE PATENTSCHRIFT

(45) Veröffentlichungstag der Patentschrift:
**31.10.90**

(51) Int. Cl.⁵: **G01N 1/28**, G01N 23/223

(21) Anmeldenummer: **87111779.2**

(22) Anmeldetag: **13.08.87**

(54) **Verfahren zur Herstellung glasartiger Boratscheiben für die Instrumentalanalyse, insbesondere Röntgenfluoreszenzanalyse.**

(30) Priorität: **15.08.86 BG 76186/86**

(43) Veröffentlichungstag der Anmeldung:
**02.03.88 Patentblatt 88/9**

(45) Bekanntmachung des Hinweises auf die Patenterteilung:
**31.10.90 Patentblatt 90/44**

(84) Benannte Vertragsstaaten:
**AT BE CH DE FR GB IT LI LU NL**

(56) Entgegenhaltungen:
**DE-A- 2 216 035**

**FRESENIUS - ZEITSCHRIFT FÜR ANALYTISCHE CHEMIE, Band 250, 9. Juni 1970, Seite 317; H.M. LÜSCHOW et al.: "Über die Verwendung von Graphittiegeln zur Probenpräparation in der Röntgenfluorescenzanalyse"**
**JOURNAL OF ANALYTICAL CHEMISTRY OF THE USSR, Band 38, Nr. 12, Teil 1, Dezember 1983, Seiten 1640-1645, New York, US; T.M. MALYUTINA et al.: "X-ray fluorescence analysis of ores and concentrates of rare metals, with the preparation of glassy emitters in glass-graphite crucibles" R-8480-FR; Order No. PB84-213586, 51pp. (Fr). Avail. NTIS. From Gov. Re 000**

**Die Akte enthält technische Angaben, die nach dem**

(73) Patentinhaber: **GEOLOGITSCHESKI INSTITUT, Akad. G. Bontschev-Str. BL. 24, Sofia(BG)**

(72) Erfinder: **Panayotov, Georgi Angelov, Dipl.-Ing., Miko Papo-Strasse, Bl.117-4, Sofia(BG)**

(74) Vertreter: **Finck, Dieter et al, Patentanwälte v. Füner, Ebbinghaus, Finck Mariahilfplatz 2 & 3, D-8000 München 90(DE)**

(56) Entgegenhaltungen: (Fortsetzung)
**Eingang der Anmeldung eingereicht wurden und die nicht in dieser Patentschrift enthalten sind.**

## Beschreibung

Die Erfindung betrifft ein Verfahren zur Herstellung glasartiger Boratscheiben für die Instrumentalanalyse, insbesondere Röntgenfluorszenzanalyse, bei welchem eine bestimmte Menge eines zu prüfenden Materials mit einem Boratschmelzer vermischt wird, das Gemisch tablettiert wird, jede Tablette bei einer Temperatur über 900° C in einem Graphitring geschmolzen wird, der auf eine Graphitunterlage gestellt wird, deren Fläche der Anzahl der Graphitringe entspricht, und bei welchem danach die Schmelze abgekühlt wird.

Zur Herstellung von glasartigen Boratscheiben, die für die Instrumentalanalyse und insbesondere für die Röntgenfluoreszenzanalyse verwendbar sind, ist bereits ein Verfahren bekannt, bei welchem ein Gemisch aus einer be stimmten Menge eines zu prüfenden Materials und eines Boratschmelzers in einem Tiegel aus Platin oder Platin und einem Edelmetall, wie Gold, Rhodin oder dgl., geschmolzen wird. Die Schmelze wird in Formen aus Platin oder aus Platin mit Edelmetall gegossen und allmählich bei Temperaturen von 400° C und 200° C abgekühlt. (Afenin V.P. Gunitscheva T.N. Röntgenespektralnii fluoressentnii Analis gernich porod i Mineralov, Isdatelstvo "Nauka", 188 - 211, 208; JP-A-80/151 248; JP-A-58/123 441; JP-A-60/27 817).

Da die Bildung der Schmelze und das Gießen in die Formen bildenden Gefäße einzeln und nacheinander ausgeführt wird, ist diese Herstellung der glasartigen Scheiben äußerst arbeitsaufwendig und von der Produktion her beschränkt. Nachteilig ist dabei auch, daß ein Teil der Schmelze an dem Tiegel haften bleibt, was eine Reinigung des Tiegels mit Borat, Natriumjodid, Lithiumfluorid oder ähnlichen Substanzen oder ein Auskochen mit konzentrierter Salzsäure erforderlich macht. Das für die Tiegel und für die Formen verwendete Material ist außerdem sehr teuer.

Für die Herstellung von glasartigen Boratscheiben für die Röntgenfluoreszenzanalyse ist es ferner bekannt, ein Gemisch aus einem zu prüfenden Material und einem Boratschmelzer in Tiegeln aus Graphit oder Glasgraphit zu schmelzen, die Schmelze in eine Form aus Graphit oder Glasgraphit zu gießen und anschließend abzukühlen (Maljutina T.M., Scharova N.A. Makarova R.F., Schestakev V.A., Schwarzmann S.P.J. Anal.Chemie, 1983, Band 38, Nr. 12, S. 2137).

Dieses Verfahren ist ebenfalls sehr arbeitsaufwendig, da die Gußkörper durch einzelnes nacheinander erfolgendes Gießen der Schmelze aus dem Tiegel in die Form hergestellt werden. Außerdem wird die Schmelze durch den Graphit der Tiegel verunreinigt. Da nur ein kleiner Teil des Tiegels mit Schmelze gefüllt wird, verbrennt das Material des Tiegels relativ schnell. Aus Glasgraphit hergestellte Tiegel halten Temperaturen über 800° C nicht mehr aus, so daß sie bei dieser Temperatur nur einmal verwendet werden können und außerdem die Gefahr besteht, daß die Schmelze beim Bruch des Tiegels ausläuft.

Die Nachteile der beiden erläuterten bekannten Verfahren lassen sich auch bei der Herstellung der glasartigen Scheiben mit Hilfe halbautomatischer oder automatischer Apparate nicht vermeiden. Diese Apparate sind sehr aufwendig und erfordern eine ununterbrochene Instandhaltung.

Zum Stand der Technik gehört weiterhin ein Verfahren, mit dem sich glasartige Boratscheiben für die Röntgenfluoreszenzanalyse herstellen lassen. Bei diesem Verfahren wird ein Gemisch aus einem zu prüfenden Material und einem Schmelzer homogenisiert und zu Tabletten gepresst. Die Tablette wird in einem flachen Graphittiegel in einem Muffelofen geschmolzen. Anschließend werden aus der Schmelze in einer speziell angepassten Vakuumvorrichtung Gaseinschlüsse entfernt (Bowling Gerald D., Allin - Physik, Iris B., Jones, David R. IV; Adv. x-Ray Anal., 1984, 27, 491-6).

Bei den auf diese Weise hergestellten glasartigen Scheiben können bei der Röntgenfluoreszenzanalyse nur die zen tralen Abschnitte der Oberfläche verwendet werden, weil der Umfangsbereich durch Graphiteinschlüsse verunreinigt ist. Außerdem erfordert die Herstellung jeder einzelnen Schmelze eine spezielle Vakuumvorrichtung für die Beseitigung der Gaseinschlüsse in der Schmelze. Werden gleichzeitig mehrere Schmelzen erzeugt, müssen entsprechend viele Vakuumvorrichtungen vorhanden sein.

Schließlich ist zur Herstellung von glasartigen Boratscheiben, die für die Röntgenfluoreszenzanalyse dienen, noch bekannt, ein Gemisch aus einem zu prüfenden Material und aus einem Boratschmelzer zu homogenisieren, zu tablettisieren und anschließend in auf eine Graphitunterlage aufgesetzte Graphitringen bei einer Temperatur von 1000° C bis 1100° C zu schmelzen. Daran schließt sich eine Kühlung der Schmelze in einem zweiten Ofen an, der auf eine Temperatur von bis zu 600° C vorerwärmt ist. Danach erfolgt ein Abkühlen bis auf Raumtemperatur innerhalb von 6 bis 7 Stunden (BG-A-28 362).

Bei diesem bekannten Verfahren ist für das Abkühlen ein zweiter Ofen erforderlich. Außerdem dauert das Abkühlen der Schmelze relativ lange. Zudem müssen die hergestellten glasartigen Boratscheiben geschliffen und polliert werden, um Graphiteinschlüsse von der für die Röntgenfluoreszenzanalyse benutzten Oberfläche zu entfernen.

Die bekannten Verfahren haben außerdem alle den gemeinsamen Nachteil, daß eine gleichzeitige Fertigung einer größeren Anzahl von Boratscheiben für die Instrumentenanalyse nicht möglich ist.

Die der Erfindung zugrunde liegende Aufgabe besteht deshalb darin, das Verfahren der eingangs genannten Art so auszubilden, daß sich gleichzeitig eine große Anzahl glasartiger Boratscheiben mit äußerst glatter und graphiteinschlußfreier Arbeitsoberfläche ohne Nachbearbeitung herstellen läßt.

Diese Aufgabe wird ausgehend von dem Verfahren der eingangs genannten Art dadurch gelöst, daß das zu prüfende Material vor der Entnahme der bestimmten Menge bei einer Temperatur von über 800° C geglüht wird, daß der Graphitring eine Höhe hat, deren Zahlenwert in Millimeter dem Zahlenwert des Verhätnisses der Masse des Gemisches aus zu prüfendem Material und Boratschmelzer in Gramm und des Innendurchmessers des Graphitrings in Zentimeter ungefähr gleich ist, daß die Masse der Graphitunterlage etwa gleich der doppelten Masse des Gemisches aus zu prüfendem Material und Boratschmelzer ist und daß die Schmelze mit Graphitring und Graphitunterlage an der Luft abkühlen gelassen wird.

Mit dem erfindungsgemäßen Verfahren läßt sich eine hohe Produktivität erzielen, da gleichzeitig eine große Anzahl glasartiger Boratscheiben hergestellt werden kann. Die Gefäße für die Schmelze und die Formen können aus einem preiswerten Material hergestellt werden. Ein Vergießen der Schmelze in die Formen sowie ein Reinigen der Gefäße für die Schmelze entfällt. Außerdem ist keinerlei Vakuumvorrichtung zur Entfernung von Gaseinschlüssen erforderlich. Die Abkühlung der Schmelze kann außerdem ohne einen speziellen Ofen erfolgen. Die erfindungsgemäß hergestellten Scheiben haben eine äußerst glatte Arbeitsfläche, die frei von Graphiteinschlüssen ist, so daß eine Nachbearbeitung durch Schleifen oder Polieren entfällt.

Die Masse der Graphitunterlage ergibt sich aus ihrer Dicke und ihrer Fläche, wobei die Fläche so groß ist, daß die gewünschte Anzahl von Graphitringen auf sie aufgesetzt werden kann.

Das erfindungsgemäße Verfahren wird anhand des folgenden Beispiels näher erläutert:

Das zu prüfende Material ist in einen feinkörnigen Zustand zerkleinert und bei einer Temperatur von 1050° C glühend gemacht worden. Von diesem Material werden jeweils 1600 g abgewogen. Jede dieser abgewogenen Mengen des zu prüfenden Materials wird mit 8000 g wasserfreiem Lithiumtetraborat vermischt, homogenisiert und bei einem Druck von 10 MPa tablettiert. Jede Tablette wird in einen Graphitring eingebracht, der einen Innendurchmesser von 30 mm, einen Außendurchmesser von 50 mm und eine Höhe von bis zu 3 mm aufweist. Die Ringe sind auf eine Graphitunterlage gestellt, die eine Dicke von über 10 mm hat, wobei die Fläche der Graphitunterlage für die Aufnahme der gewünschten Anzahl von Graphitringen entsprechend bemessen ist. Die Graphitunterlage mit den darauf abgestellten, die Tabletten aufnehmenden Graphitringen wird dann in eine Ofen eingebracht, der auf eine Temperatur von bis zu 1100° C vorerhitzt ist. Die Temperatur des Ofens sinkt dabei ab. Das Schmelzen erfolgt dann bei der Wiederaufheizung des Ofens auf die vorgegebene Temperatur von 1100° C während einer Zeit von nicht weniger als 4 Minuten. Die Graphitunterlage mit den die Schmelze ent haltenden Graphitringen wird dann aus dem Ofen herausgenommen und auf eine ebene feuerfeste Platte abgesetzt, so daß sich die gesammte Anordnung an der Luft abkühlen kann. Damit man glasartige Boratscheiben von verschiedenen Durchmessern mit gleichen Eigenschaften erhalten kann, muß vor allem das Verhältnis der Masse des Gemisches von dem zu prüfenden Material und dem Boratschmelzer in Gramm und des Innendurchmessers und Graphitrings in Zentimeter ungefähr gleich der Höhe des Graphitrings in Millimeter sein.

## Patentansprüche

Verfahren zur Herstellung glasartiger Boratscheiben für die Instrumentalanalyse, insbesondere Röntgenfluoreszenzanalyse, bei welchem eine bestimmte Menge eines zu prüfenden Materials mit einem Boratschmelzer vermischt wird, das Gemisch tablettiert wird, jede Tablette bei einer Temperatur über 900° C in einem Graphitring geschmolzen wird, der auf eine Graphitunterlage gestellt wird, deren Fläche der Anzahl der Graphitringe entspricht, und bei welchem danach die Schmelze abgekühlt wird, dadurch **gekennzeichnet,** daß das zu prüfende Material vor der Entnahme der bestimmten Menge bei einer Temperatur von über 800° C geglüht wird, daß der Graphitring eine Höhe hat, deren Zahlenwert in Millimeter dem Zahlenwert des Verhältnisses der Masse des Gemisches aus zu prüfendem Material und Boratschmelzer in Gramm und des Innendurchmessers des Graphitrings in Zentimeter ungefähr gleich ist, daß die Masse der Graphitunterlage etwa gleich der doppelten Masse des Gemisches aus zu prüfendem Material und Boratschmelzer ist und daß die Schmelze mit Graphitring und Graphitunterlage an der Luft abkühlen gelassen wird.

## Claims

Process for the production of vitreous borate disks for instrumental analysis, in particular X-ray fluorescence analysis in which a determined amount of a material to be tested is mixed with a borate melt, the mixture is tableted, each tablet is melted at a temperature above 900°C in a graphite ring which is placed on a graphite support whose surface area corresponds to the number of graphite rings, and which the melt is cooled afterwards, characterised in that the material to be tested is calcined at a temperature of above 800°C before the removal of the determined amount, that the graphite ring has a height whose numerical value in millimetres is equal to the numerical value of the ratio of the mass of the mixture of material to be tested and borate melt in grams and the internal diameter of the graphite ring in centimetres, that the mass of the graphite support is approximately equal to double the mass of the mixture of material to be tested and borate melt and that the melt with graphite ring and graphite support is allowed to cool in air.

## Revendications

Procédé de fabrication de disques de borate vitreux pour l'analyse instrumentale, en particulier l'analyse par fluorescence X, suivant lequel une quantité déterminée d'une matière à étudier est mélangée avec un fondant de type borate, le mélange est soumis à un pastillage, chaque pastille est fondue à une température dépassant 900°C dans une bague de graphite qui est placée sur un support de graphite, dont la surface correspond au nombre des bagues de graphite, et suivant lequel, après cela, la masse en fusion est refroidie, caractérisé par le fait que la matière à étudier est portée au rouge avant le prélèvement de la quantité déterminée, à une température dépassant 800°C, que la bague de graphite a une hauteur dont la valeur numérique, en millimètres, est approximativement égale à la valeur numérique du rapport de la masse du mélange de la matière à étudier et du fondant de type borate, en grammes, et du diamètre interne de la bague de graphite, en centimètres, que la masse du support de graphite est à peu près égale au double de la masse du mélange de la matière à étudier et du fondant de type borate, et qu'on laisse refroidir à l'air la masse en fusion avec la bague de graphite et le support de graphite.